# EUROPEAN PATENT APPLICATION

(11) **EP 4 838 646 A1**
(43) Date of publication of application: **11.11.2026**
(21) Application number: 26175039.2
(22) Date of filing: 28.04.2026
(51) Int. Cl.: H01M 50/15, H01M 50/55, H01M 50/176, H01M 50/188, H01M 50/553

(54) **LID ASSEMBLY AND MANUFACTURING METHOD THEREOF**

(30) Priority: 09.05.2025 CN 202510596516; 20.08.2025 CN 202511171250
(71) Applicant: AESC Japan Ltd., Yokohama-shi, Kanagawa 220-0012 (JP)
(72) Inventor: LU, Jingjia, Jiangyin CIty, Wuxi City (CN)
(74) Representative: Becker, Eberhard

(57) **Abstract**

Disclosed are a lid assembly (1000) and a manufacturing method thereof. The lid assembly includes: a lid (100), the lid includes a lid base (110), the lid base is provided with a mounting hole (111) extending through the lid base along the thickness direction (Z); a terminal (200), connected to the lid and passing through the mounting hole; the terminal includes a terminal base (210), the terminal base includes a first end surface (211) away from the electrode assembly (3000) along the thickness direction of the lid base; the first end surface includes a first portion (2111) and a second portion (2112) arranged around the first portion, along the thickness direction of the lid base, the first portion protrudes from the second portion toward a side away from the electrode assembly. The lid assembly and the manufacturing method thereof improve the safety performance and electrical performance of the cell.

## Description

### BACKGROUND

### Technical Field

The present disclosure relates to the field of energy storage technology, and particularly relates to a lid assembly and manufacturing method thereof.

### Related Art

The lid assembly of a cell serves to effect electrical connection with external circuitry and therefore constitutes a critical component of a lithium battery. Should the reliability of the connection between the lid assembly and the external circuitry be inadequate, not only that the electrical performance of the battery will be adversely affected, but also the safety performance of the battery will be compromised.

### SUMMARY

### Technical problem

In view of this, the purpose of the present disclosure is to propose a lid assembly and manufacturing method thereof to at least partially solve the problem of poor battery safety performance.

### Solution to Problem

Based on the above purpose, a first aspect of the present disclosure provides a lid assembly, including: a lid, the lid includes a lid base, the lid base is provided with a mounting hole extending through the lid base along a thickness direction; and a terminal, connected to the lid and disposed through the mounting hole, wherein the terminal includes a terminal base, the terminal base includes a first end surface away from an electrode assembly along the thickness direction of the lid base, wherein the first end surface includes a first portion and a second portion disposed around the first portion, along the thickness direction of the lid base, the first portion protrudes from the second portion toward a side away from the electrode assembly.

Optionally, the terminal base includes a first side wall, and further includes a second end surface facing the electrode assembly along the thickness direction of the lid base, the first side wall connects the second portion and the second end surface, and a rounded corner or a chamfer is formed between the second portion and the first side wall.

Optionally, along a preset direction, a dimension of the rounded corner or the chamfer is L₁, where 0 mm < L₁ ≤ 2 mm, and the preset direction is perpendicular to the thickness direction of the lid base.

Optionally, the terminal base further includes a second side wall, the first portion and the second portion are connected through the second side wall, and a transition structure is formed between the second portion and the second side wall. Along the thickness direction of the lid base, the transition structure is recessed toward a side close to the electrode assembly.

Optionally, the terminal base includes the second end surface facing the electrode assembly along the thickness direction of the lid base. Along the preset direction, a dimension of the first portion is greater than a dimension of the second end surface. The preset direction is perpendicular to the thickness direction of the lid base.

Optionally, along the preset direction, a width of the second portion is L₂, where 0.1 mm ≤ L₂ ≤ 6 mm, and the preset direction is perpendicular to the thickness direction of the lid base.

Optionally, along the thickness direction of the lid base, a linear distance between the first portion and the second portion is H₁, where 0.1 mm ≤ H₁ ≤ 2 mm.

Optionally, the lid assembly includes an upper insulation portion fixedly connected to the terminal, and the upper insulation portion includes a third end surface away from the electrode assembly along the thickness direction of the lid base. The third end surface does not exceed the second portion on a side away from the electrode assembly along the thickness direction of the lid base.

Optionally, the lid includes a fixing structure connected to the lid base. The fixing structure is arranged around the mounting hole. The fixing structure includes a first fixing portion fixedly connected to the terminal. The first fixing portion is located on a side of the lid base away from the cell along the thickness direction of the lid base. The upper insulation portion is at least partially connected between the first fixing portion and the terminal. The first fixing portion includes a fourth end surface away from the electrode assembly along the thickness direction of the lid base. On a side away from the electrode assembly along the thickness direction of the lid base, the third end surface exceeds the fourth end surface. A linear distance between the third end surface and the fourth end surface is H₂, where H₂ ≥ 0.2 mm.

Optionally, the fixing structure further includes a second fixing portion. The second fixing portion is located on a side of the first fixing portion close to the electrode assembly along the thickness direction of the lid base. The terminal includes a protruding portion protruding from the terminal base along a radial direction of the terminal. Along the thickness direction of the lid base, the protruding portion is arranged between the second portion and the second end surface. The lid assembly includes a sealing portion located between the protruding portion and the second fixing portion and arranged around the terminal base. Along the thickness direction of the lid base, an orthogonal projection of the sealing portion covers the second portion.

Optionally, along the thickness direction of the lid base, the upper insulation portion covers a portion of the rounded corner or the chamfer.

Based on the same inventive concept, a second aspect of the present disclosure further provides a manufacturing method for forming the lid assembly as described in the first aspect, the manufacturing method includes:
providing a lid formed with a mounting hole;
inserting the terminal through the mounting hole;
fitting a molding die of the upper insulation portion with the second portion of the terminal to position the molding die of the upper insulation portion at least through the second portion;
fitting the molding die of the upper insulation portion with the second portion to enable the molding die of the upper insulation portion, the terminal and the lid together to define a molding cavity communicating with the mounting hole; and
filling the molding cavity with a material to form the upper insulation portion.

Optionally, the lid includes a fixing structure connected to the lid base. The fixing structure is arranged around the mounting hole. The fixing structure includes a first fixing portion fixedly connected to the terminal. The first fixing portion is located on a side of the lid base away from the electrode assembly along the thickness direction of the lid base.

The step of filling the molding cavity with the material to form the upper insulation portion includes:
injecting a flowing injection-molding material into the molding cavity to enable the injection-molding material to fill into the mounting hole and spread along a preset direction to a side of the first fixing portion away from the terminal. The injection-molding material forms the upper insulation portion connecting the terminal and the lid after solidification, wherein the preset direction is perpendicular to the thickness direction of the lid base.

### Technical effect

As apparent from the foregoing, in the lid assembly and the manufacturing method thereof provided in the present disclosure, the second portion of the first end surface is lower in height than the first portion of the first end surface. When forming or assembling the upper insulation portion and positioning or mating with reference to the first end surface is required, the second portion may serve as a locating datum surface or a mating surface, such that the molding die for forming the upper insulation portion or a tooling for installing the upper insulation portion, when brought into contact with the first end surface, contacts only the lower-height second portion, thereby protecting the higher first portion. Thus, even if the second portion is indented or otherwise damaged by the molding die or the tooling, no adverse effect is exerted on the first portion, and the first portion may still establish a high-quality, stable connection with an external circuit, thereby contributing to improved electrical performance and safety performance of a cell employing the lid assembly of the present disclosure.

### BRIEF DESCRIPTION OF THE DRAWINGS

In order to more clearly illustrate the technical solutions in the present disclosure or related technology, the drawings required for use in the description of the embodiments or related technology will be briefly introduced below. Obviously, the drawings in the following description are merely embodiments of the present disclosure. For those of ordinary skill in the art, other drawings may also be obtained based on these drawings without creative effort.
FIG. 1 is a top view of a lid assembly according to an embodiment of the present disclosure.
FIG. 2 is a sectional diagram taken along line A-A in FIG. 1.
FIG. 3 is an enlarged diagram of a first structure of a portion B in FIG. 2.
FIG. 4 is an enlarged diagram of a second structure of a portion B in FIG. 2.
FIG. 5 is an enlarged diagram of a portion C in FIG. 4.
FIG. 6 is an enlarged diagram of a portion D in FIG. 5.
FIG. 7 is a partial sectional diagram of a terminal of a lid assembly with a second structure according to an embodiment of the present disclosure.
FIG. 8 is a flow diagram of an assembling method of a lid assembly according to an embodiment of the present disclosure.
FIG. 9 is a partial sectional diagram of a lid assembly with a second structure before assembling a terminal according to an embodiment of the present disclosure.
FIG. 10 is a partial sectional diagram of a terminal connected with a sealing portion being inserted into a mounting hole of a lid assembly with a second structure according to an embodiment of the present disclosure.
FIG. 11 is a partial sectional diagram of a lid assembly of a second structure according to an embodiment of the present disclosure, in a state in which an injection molding die compresses the terminal.
FIG. 12 is a partial sectional diagram of a lid assembly with a second structure after forming an upper insulation portion according to an embodiment of the present disclosure.

### DESCRIPTION OF THE EMBODIMENTS

To make the purpose, technical solutions and advantages of the present disclosure clearer, the present disclosure is further described in detail below in combination with specific examples and with reference to the accompanying drawings.

It should be noted that: unless otherwise specifically stated, the relative arrangement of components, numerical expressions and numerical values set forth in these embodiments do not limit the scope of the present disclosure.

At the same time, it should be understood that, for convenience of description, the dimensions of various parts shown in the drawings are not drawn according to actual proportional relationships.

The following description of at least one exemplary embodiment is actually merely illustrative and in no way serves as any limitation on the present disclosure and its application or use.

It should be specified that, unless otherwise defined, technical terms or scientific terms used in the embodiments of the present disclosure should have the usual meanings understood by persons with general skills in the field to which the present disclosure belongs. "First", "second" and similar words used in the embodiments of the present disclosure do not indicate any order, quantity or importance, but are only used to distinguish different components. "Include" or "contain" and similar words mean that the elements or objects appearing before the word cover the elements or objects listed after the word and their equivalents, without excluding other elements or objects. "Connect" or "connected" and similar words are not limited to physical or mechanical connections, but may include electrical connections, whether direct or indirect. "Upper", "lower", "left", "right", etc. are only used to indicate relative positional relationships, and when the absolute position of the described object changes, the relative positional relationship may also change accordingly.

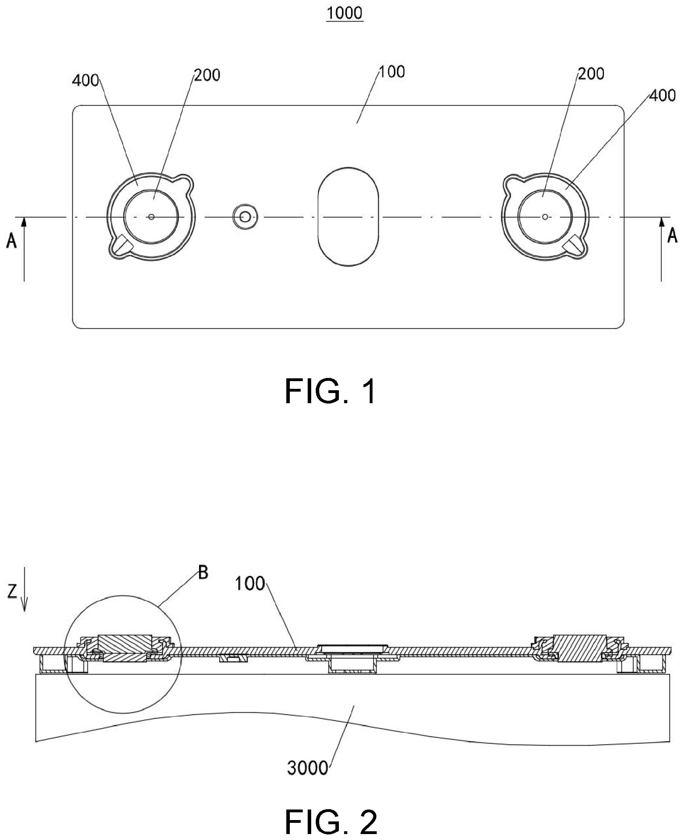

FIG. 1 shows a top view of a lid assembly 1000.

As shown in FIG. 1, in some embodiments, the lid assembly 1000 includes a lid 100, and two terminals 200 connected to the lid 100. One of the terminals 200 may serve as a positive electrode of the cell, and the other may serve as a negative electrode of the cell.

FIG. 2 shows a sectional diagram taken along line A-A in FIG. 1.

Taking the structure and direction shown in FIG. 2 as an example for illustration, a top end and a bottom end of the terminal 200 extend out of the lid 100, with its top end provided for electrical connection with external circuits (for example, current collecting assemblies, bus bars or loads), and its bottom end provided for electrical connection with an electrode assembly 3000 of the cell.

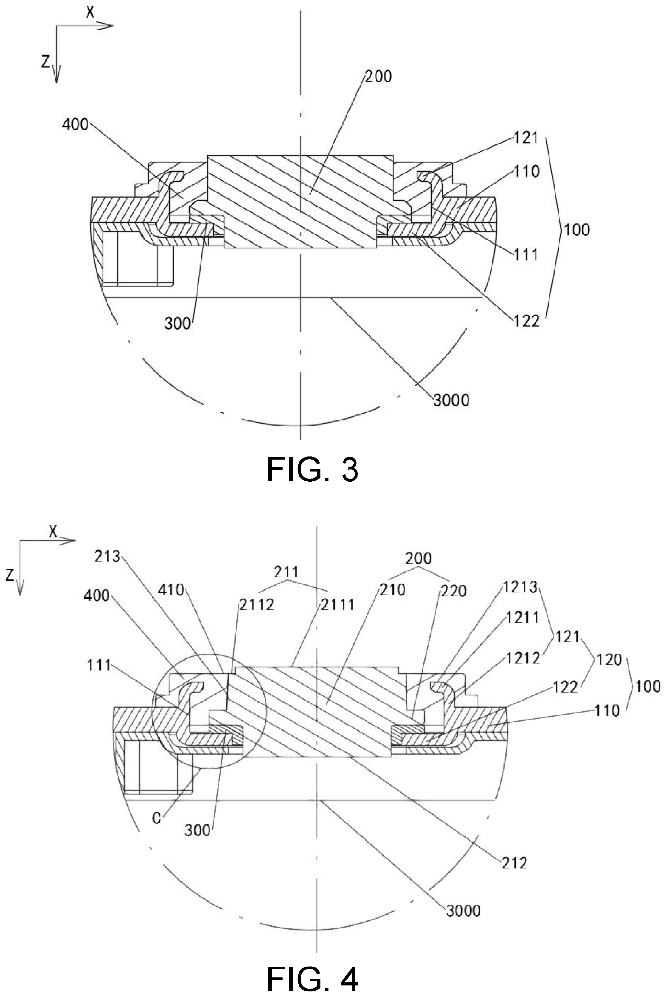

FIG. 3 shows an enlarged diagram of a first structure of a portion B in FIG. 2.

As shown in FIG. 3, specifically, a panel surface of a side of the lid 100 (as shown in FIG. 3, a panel surface at a lower side of the lid 100) is close to the electrode assembly 3000. The lid 100 includes a lid base 110, and the lid base 110 is provided with a mounting hole 111 extending through the lid base 110 in a thickness direction (such as the Z direction in FIG. 3, hereinafter referred to as the first direction). The terminal 200 is inserted through the mounting hole 111, and the terminal 200 is fixedly connected to the lid 100 through an upper insulation portion 400.

Taking the structure and direction shown in FIG. 3 as an example for illustration. The top end of the terminal 200 is provided for electrical connection with external circuits

In the manufacturing process of the lid assembly 1000, the molding process of the upper insulation portion 400 or the fitting process of the upper insulation portion 400 with the terminal 200 requires positioning or fitting with the terminal 200 to some extent. That is to say, a forming mold provided for forming the upper insulation portion 400 or the tooling provided for connecting the upper insulation portion 400 with the terminal 200 contacts a surface of the terminal 200.

Taking a top surface of the terminal 200 as an example, the top surface of the terminal 200 is entirely flat. When the forming molding die or the tooling contacts the top surface of the terminal 200, the entire top surface may be damaged by the forming molding die or tooling, reducing the area of the top surface of the terminal 200 that exhibits relatively good surface quality. As a result, the subsequent connection quality between the terminal 200 and an external circuit is degraded, leading to an unstable electrical connection, which in turn adversely affects the safety performance of the cell and the battery.

To solve the above problems, this embodiment provides other lid assemblies 1000.

FIG. 4 shows an enlarged diagram of a second structure of a portion B in FIG. 2.

As shown in FIG. 1 and FIG. 4, in some embodiments, the lid assembly 1000 includes: the lid 100, wherein the lid 100 includes the lid base 110, the lid base 110 is provided with the mounting hole 111 extending through the lid base 110 in a first direction; the terminal 200, connected to the lid 100 and inserted through the mounting hole 111, wherein the terminal 200 includes a terminal base 210, and the terminal base 210 includes a first end surface 211 away from the electrode assembly 3000 in the first direction. The first end surface 211 includes a first portion 2111 and a second portion 2112 arranged around the first portion 2111. In the first direction, the first portion 2111 protrudes from the second portion 2112 toward a side away from the electrode assembly 3000.

Exemplarily, a shape of the first portion 2111 may be circular, elliptical, or polygonal.

It should be specified that the second portion 2112 may surround the first portion 2111 entirely along a circumferential direction of the first portion 2111, in which case the second portion 2112 forms an annular surface connected end to end. Alternatively, the second portion 2112 may also partially surround the first portion 2111 along the circumferential direction of the first portion 2111, in which case the second portion 2112 forms an arc-shaped surface or a polygonal surface.

In this embodiment, the first portion 2111 and the second portion 2112 of the first end surface 211 are configured as a stepped surface, with the first portion 2111 being higher in height (i.e., farther from the electrode assembly 3000 in the first direction) and the second portion 2112 being lower in height (i.e., closer to the electrode assembly 3000 in the first direction). The first portion 2111 is provided for connecting with external circuits, while the second portion 2112 contacts the forming molding die or tooling for positioning or fitting when forming the upper insulation portion 400 or connecting the upper insulation portion 400 and the terminal 200, avoiding contact between the forming molding die or the tooling and the first portion 2111.

Even if the second portion 2112 is damaged during contact with the forming molding die or the tooling, it may be ensured that the first portion 2111 has a good surface quality, thus ensuring reliable connection with external circuits.

In the lid assembly 1000 provided in this embodiment, with the second portion 2112 of the first end surface 211 being lower than the first portion 2111, when forming or assembling the upper insulation portion 400 and positioning or mating with reference to the first end surface 211 is required, the second portion 2112 may serve as a locating datum surface or a mating surface, such that the molding die for forming the upper insulation portion 400 or a tooling for installing the upper insulation portion 400, when brought into contact with the first end surface 211, contacts only the lower-height second portion 2112, thereby protecting the higher first portion 2111. Thus, even if the second portion 2112 is indented or otherwise damaged by the molding die or the tooling, no adverse effect is exerted on the first portion 2111, and the first portion 2111 may still establish a high-quality, stable connection with an external circuit, thereby contributing to improved electrical performance and safety performance of a cell employing the lid assembly 100 of the present embodiment.

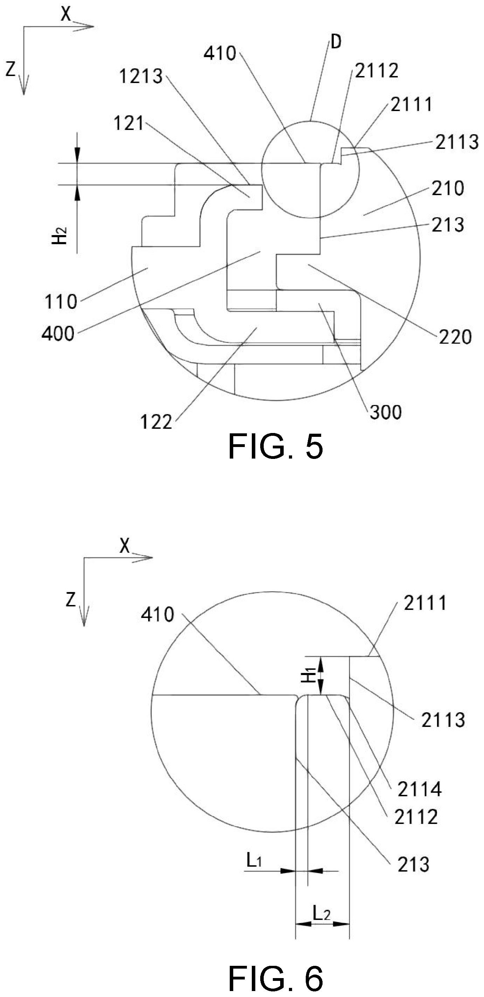

FIG. 5 is an enlarged diagram of a portion C in FIG. 4. FIG. 6 is an enlarged diagram of a portion D in FIG. 5. It should be specified that, in order to clearly show the structure of the portion C in FIG. 4, the section lines of each structural component are no longer shown in FIG. 5 and FIG. 6.

As shown in FIG. 4, FIG. 5, and FIG. 6, in some embodiments, the terminal base 210 includes a first side wall 213 and further includes a second end surface 212 facing the electrode assembly 3000 in the first direction. The first side wall 213 connects the second portion 2112 with the second end surface 212. A rounded corner or a chamfered corner (hereinafter referred to as chamfer) is formed between the second portion 2112 and the first side wall 213.

It should be specified that an axis of the terminal base 210 extends in the first direction, and a cylindrical surface of the terminal base 210 formed around its axis is the first side wall 213.

Exemplarily, the chamfer may be set around a circumference of the first side wall 213, or may be provided only in some areas.

Exemplarily, the chamfer may be formed by removing a material or compressing the material.

Exemplarily, the second end surface 212 may be a flat surface or a stepped surface.

It should be specified that the upper insulation portion 400 may be formed through an injection molding process.

When forming the upper insulation portion 400 through injection molding, the molding die used has an internal cavity that accommodates a flowing injection-molding material and may shape the injection-molding material.

During the process of injection molding the upper insulation portion 400, a cavity top surface of a molding die 2000 of the upper insulation portion (hereinafter referred to as cavity top surface) may abut against the second portion 2112, in which case the two surfaces are substantially located in the same plane and the two surfaces may form a sealing structure, thereby limiting the shape of the injection-molding material entering the cavity.

It can be understood that a surface (hereinafter referred to as the top surface of the chamfer) of the chamfer away from the electrode assembly 3000 is located along on a side (i.e., in FIG. 6, the top surface of the chamfer is located below the second portion 2112) of the second portion 2112 away from the first portion 2111 along the first direction. In this way, when the cavity top surface abuts against the second portion 2112, a gap (hereinafter referred to as top gap) will be formed between the top surface of the chamfer and the cavity top surface.

During the process of injecting the injection-molding material into the cavity of the molding die, an opening of the molding die is provided for pouring the injection-molding material, therefore, the gas in the cavity cannot be discharged from the cavity in time.

As the flowing injection-molding material is injected into the gap (hereinafter referred to as hole gap) between the terminal 200 and a wall of the mounting hole 111, some gas in the hole gap will move upward, and the gas may enter the top gap, thereby enabling the flowing injection-molding material to fill the hole gap more sufficiently. Compared with the case in which the terminal 200 is not provided with a chamfer, the upper insulation portion 400 in this embodiment, by virtue of the presence of the top gap, more fully fills the space in the vicinity of the top gap, thereby improving the molding quality of the upper insulation portion 400, enhancing the connection reliability between the terminal 200 and the lid 100, and improving the insulation performance and sealing performance of the upper insulation portion 400.

At the same time, since the chamfer is located at and adjacent to an outer periphery of a planar portion of the second portion 2112, when the cavity top surface abuts against the second portion 2112, the cavity top surface and the planar portion of the second portion 2112 may form an effective sealing structure. Moreover, in combination with the above content, it can be known that the gas in the top gap will block the injection-molding material, therefore it is possible to further prevent the injection-molding material from flowing between the cavity top surface and the planar portion of the second portion 2112, thereby further ensuring that the structure of the formed upper insulation portion 400 meets the design requirements.

As shown in FIG. 6, in some embodiments, along a preset direction (such as the X direction in FIG. 6), a dimension of the chamfer is L₁, where 0 mm < L₁ ≤ 2 mm. The preset direction is perpendicular to the thickness direction of the lid base 110.

Exemplarily, L₁ may be 0.05 mm, 0.1 mm, 0.15 mm, 0.2 mm, 0.4 mm, 0.5 mm, 0.6 mm, 0.8 mm, 1 mm, 1.2 mm, 1.4 mm, 1.5 mm, 1.6 mm, 1.8 mm or 2 mm.

It needs to be specified that, along the preset direction, when the chamfers are located on opposite sides of the first portion 2111, L₁ is an extension dimension of the chamfer located on a side of the first portion 2111.

If L₁ is too large, a width (i.e., the dimension along the preset direction) of the planar portion of the second portion 2112 will be too small. When the cavity top surface abuts against the second portion 2112, an effective abutting area between them will also be correspondingly reduced, such that the second portion 2112 cannot provide reliable support and positioning for the molding die, and a structural strength at the location of the second portion 2112 is likewise reduced, rendering the second portion 2112 prone to deformation or crushing under compression by the molding die. Conversely, if L₁ is excessively small, a space within the upper top is insufficient, and the volume of gas that may be accommodated therein is likewise insufficient, such that the effect on improving the molding quality of the upper insulation portion 400 is not significant; moreover, the formation of the chamfer is adversely affected.

In order to avoid the above problems, this embodiment designs L₁ as 0 mm < L₁ ≤ 2 mm. On one hand, it may be ensured that the effective abutting area is relatively sufficient when the cavity top surface abuts against the second portion 2112, ensuring that the second portion 2112 can provide reliable support and positioning for the molding die, and reducing the risk of the second portion 2112 experiencing compression deformation or crushing. On the other hand, it is also possible to provide a relatively sufficient space in the top gap, so that more gas may be accommodated, which helps to improve the molding quality of the upper insulation portion 400.

As shown in FIG. 4, FIG. 5 and FIG. 6, in some embodiments, the terminal base 210 further includes a second side wall 2113. The first portion 2111 and the second portion 2112 are connected through the second side wall 2113, and a transition structure 2114 is formed between the second portion 2112 and the second side wall 2113. Along the first direction, the transition structure 2114 is recessed toward a side close to the electrode assembly 3000.

It needs to be specified that the second side wall 2113 is a cylindrical surface located between the first portion 2111 and the second portion 2112 and arranged around a circumference of the axis of the terminal base 210. It can be understood that the shape of the second side wall 2113 is not particularly limited, and a suitable shape may be selected according to the specific structures of the first portion 2111 and the second portion 2112.

Exemplarily, the transition structure 2114 may be formed by removing the material or compressing the material.

From the foregoing, it can be understood that, when the upper insulation portion 400 is formed by injection molding, the cavity top surface is required to abut the planar portion of the second portion 2112. If a structure protruding in the first direction toward the first portion 2111 is formed between the second portion 2112 and the second sidewall 2113, such protruding structure may interfere with the cavity top surface, thereby impeding the close abutting engagement between the cavity top surface and the planar portion of the second portion 2112, and resulting in the molding die not being reliably supported and positioned. The foregoing protruding structure is more likely to occur in a portion of the second portion 2112 adjacent to the second sidewall 2113. That is, at a junction between the second portion 2112 and the second sidewall 2113, structures such as burrs, protuberances, small arcuate surfaces, or stepped surfaces may arise during molding. In such a case, the junction between the second portion 2112 and the second sidewall 2113 will be higher than other portions of the second portion 2112, namely, the junction will protrude on a side facing away from the electrode assembly 3000. Under such circumstances, when the second portion 2112 serves as a locating or mating surface, the molding die, tooling, or other mating structures may be affected by the aforesaid protruding structure, such that they are prevented from being in intimate contact with a majority of the surface of the second portion 2112 and are instead lifted by the protruding structure.

In order to avoid the above problems, this embodiment provides the transition structure 2114 recessed toward a side close to the electrode assembly 3000 between the second portion 2112 and the second side wall 2113, thereby avoiding the formation of protruding structures at the above positions, ensuring that the cavity top surface may better closely abut against the planar portion of the second portion 2112, so that the planar portion of the second portion 2112 may provide reliable support and positioning for the molding die, ensuring the molding quality of the upper insulation portion 400.

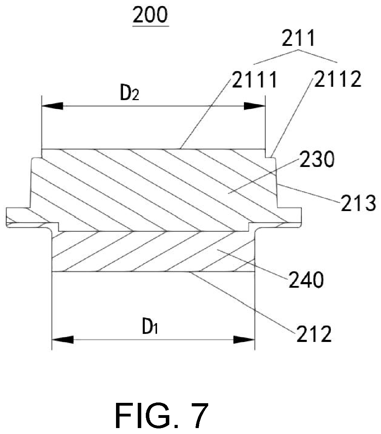

FIG. 7 shows a partial sectional diagram of the terminal 200.

As shown in FIG. 7, in some embodiments, the terminal base 210 includes the second end surface 212 facing the electrode assembly 3000 along the first direction. Along the preset direction, a dimension D₂ of the first portion 2111 is greater than a dimension D₁ of the second end surface 212.

In some embodiments, the second end surface 212 generally cooperates with, and is electrically connected to, other structures within the cell so as to output electrical power. When the first portion 2111 is connected to an external circuit, the electrical power of the cell is conducted outward via the second end surface 212 and the first portion 2111. Accordingly, in the preset direction, configuring the first portion 2111 to have the dimension D₂ greater than the dimension D₁ of the second end surface 212 ensures that the first portion 2111 is not undersized in a manner that would constrain a current-carrying capability of the terminal 200, thereby ensuring the electrical performance of the cell or the battery.

It needs to be specified that, in order to reduce the material cost and weight of the terminal 200, the terminal 200 may include a first connection portion 230 and a second connection portion 240 that are connected to each other along the first direction. An end surface of the first connection portion 230 away from the second connection portion 240 is configured as the first end surface 211, and an end surface of the second connection portion 240 away from the first connection portion 230 is configured as the second end surface 212. The materials of the first connection portion 230 and the second connection portion 240 may be the same or different.

The second end surface 212 may be directly electrically connected to a tab of the electrode assembly 3000, or may be electrically connected to the tab of the electrode assembly 3000 through an adapter. When the second end surface 212 is electrically connected to the tab through the adapter, the adapter and the terminal 200 may be integrally arranged or separately arranged, and the adapter may be a plate-like structure extending along the preset direction. The adapter may be connected to the second end surface 212 through welding, integral molding connection, or riveting.

When the terminal 200 includes the first connection portion 230 and the second connection portion 240 connected to each other, differences in the materials of the two, and hence in their electrical conductivities, will result in discrepancies between the overcurrent-carrying capacities of the first connection portion 230 and the second connection portion 240. The ultimate overcurrent-carrying capacity of the terminal 200 is primarily limited by the portion having the lower overcurrent-carrying capacity. Accordingly, the foregoing discrepancy may be remedied by adjusting a relationship between an area of the first portion 2111 and an area of the second end surface 212, so as to ensure the overall overcurrent-carrying capacity of the terminal 200.

It can be understood that both the area of the first portion 2111 and the area of the second end surface 212 are positively correlated with the current-carrying capability. In some embodiments, a material of the second connection portion 240 has a greater current-carrying capability, for example, the material of the second connection portion 240 is copper, and a material of the first connection portion 230 is aluminum. In this condition, compensation may be made by expanding the area of the first portion 2111 to ensure the current-carrying capability of the terminal 200.

In summary, in this embodiment, D₂ may be designed to be greater than D₁, so that the terminal 200 exhibits an enhanced overall current-carrying capability, the area of the first portion 2111 is no longer the main factor restricting the current-carrying capability of the terminal 200, the current-carrying performance of the second end surface 212 is fully utilized, which helps to improve the electrical performance of the cell using the lid assembly 1000 of this embodiment.

As shown in FIG. 5 and FIG. 6, in some embodiments, along the preset direction, a width of the second portion 2112 is L₂, where 0.1 mm ≤ L₂ ≤ 6 mm.

It needs to be specified that the width of the second portion 2112 is a minimum linear distance between the first side wall 213 and the second side wall 2113 along the preset direction. In other words, along the preset direction, when the second portion 2112 is located on opposite sides of the first portion 2111, L₂ is the width of the second portion 2112 located on a side of the first portion 2111.

Exemplarily, L₂ may be 0.1 mm, 0.2 mm, 0.3 mm, 0.5 mm, 0.6 mm, 0.8 mm, 1 mm, 1.5 mm, 2 mm, 2.5 mm, 3 mm, 3.5 mm, 4 mm, 4.5 mm, 5 mm, 5.5 mm, or 6 mm.

If L₂ is excessively small, the width of the planar portion in the second portion 2112 is correspondingly too small. When the cavity top surface abuts the second portion 2112, the effective abutment area therebetween is insufficient, such that the second portion 2112 cannot provide reliable support and positioning for the molding die. The structural strength at the location of the second portion 2112 is also reduced, rendering the second portion 2112 susceptible to deformation or crushing under mold compression. If L₂ is excessively large, a dimension of the terminal base 210 in the preset direction may become excessive; accordingly, a diameter of the mounting hole 111 will also be excessively large. If an external contour dimension of the lid 100 is relatively small, the structural strength of the lid 100 will be reduced. Consequently, the terminal 200 would be suitable only for the lid 100 of relatively large size, resulting in poor general applicability of the terminal 200. If the dimension of the terminal base 210 in the preset direction is constrained, and L₂ is excessively large, the area of the first portion 2111 may become unduly small, which, as indicated above, results in inadequate current-carrying capacity at the electrical connection between the terminal 200 and the external circuit, thereby adversely affecting the electrical performance and safety performance of the cell.

To avoid the above problems, this embodiment designs L₂ as 0.1 mm ≤ L₂ ≤ 6 mm. On one hand, it can be ensured that the structural strength at the position where the second portion 2112 is located meets the requirements, able to provide reliable support and positioning for the molding die, and reduce the risk of compression deformation or crushing of the second portion 2112. On the other hand, it is possible to reserve a sufficient setting space for the first portion 2111, ensure that the area of the first portion 2111 can meet the current-carrying capability requirements, and can make the dimension of the terminal base 210 along the preset direction relatively reasonable, so that the terminal 200 may be applied to various lids 100 of different specifications, which helps to improve the versatility of the terminal 200.

As shown in FIG. 6, in some embodiments, along the first direction, a linear distance between the first portion 2111 and the second portion 2112 is H₁, where 0.1 mm ≤ H₁ ≤ 2 mm.

Exemplarily, H₁ may be 0.1 mm, 0.2 mm, 0.3 mm, 0.4 mm, 0.5 mm, 0.6 mm, 0.7 mm, 0.8 mm, 0.9 mm, 1 mm, 1.5 mm or 2 mm.

If H₁ is too small, when the formed upper insulation portion 400 is aligned with the second portion 2112 along the first direction, the upper insulation portion 400 is close to the first portion 2111. When the first portion 2111 is welded with external circuits, the upper insulation portion 400 is more easily affected by the heat during welding. After the upper insulation portion 400 absorbs excessive welding heat, the upper insulation portion 400 is prone to softening, which leads to reduced connection reliability between the terminal 200 and the lid 100, and also causes reduced sealing performance and insulation performance of the upper insulation portion 400. Meanwhile, in actual production, both the upper insulation portion 400 and the terminal 200 inevitably have dimensional errors. If H₁ is too small, when an outer end surface of the first portion 2111 is connected with external circuits, there may be interference risk between the upper insulation portion 400 and external circuits due to dimensional errors of the terminal base 210 or the upper insulation portion 400. If H₁ is too large, the dimension of the terminal base 210 along the first direction will be too large, excessively occupying the space in the height direction of the cell, resulting in reduced energy density of the cell.

To avoid the above problems, this embodiment designs H₁ as 0.1 mm ≤ H₁ ≤ 2 mm. On one hand, such design may protect the upper insulation portion 400, ensure the connection reliability between the terminal 200 and the lid 100, and may prevent interference between the upper insulation portion 400 and external circuits connected to the first portion 2111, reduce the space occupied by the terminal 200 in the height direction of the cell, so that the space saved by the terminal 200 may be used to set a larger-sized electrode assembly 3000, thereby improving the energy density of the cell.

As shown in FIG. 1, FIG. 4 and FIG. 5, in some embodiments, the lid assembly 1000 includes the upper insulation portion 400 fixedly connected to the terminal 200. The upper insulation portion 400 includes a third end surface 410 extending away from the electrode assembly 3000 along the first direction. A side of the third end surface 410 extending away from the electrode assembly 3000 along the first direction does not exceed the second portion 2112.

Exemplarily, the third end surface 410 may be a flat surface, or a convex surface protruding away from the electrode assembly 3000 along the first direction, or a concave surface close to the electrode assembly 3000 along the first direction.

The third end surface 410 not exceeding the second portion 2112 in this embodiment means that the upper insulation portion 400 does not exceed a region of the second portion 2112 that is closest to the first portion 2111 along the first direction.

Exemplarily, the upper insulation portion 400 may be aligned with the second portion 2112 or lower than the second portion 2112 along the first direction.

When the first end surface 2111 is electrically connected to an external circuit, since a side of the third end surface 410 that is away from the electrode assembly 3000 along the first direction does not extend beyond the second portion 2112, it is ensured that the upper insulation portion 400 remains spaced apart from the first portion 2111 that is higher than the second portion 2112, and that the upper insulation portion 400 also remains spaced apart from the external circuit. On the one hand, this ensures that the terminal 200 may form a stable and reliable electrical connection with the external circuit, thereby facilitating further improvements in the safety performance and electrical performance of the cell. On the other hand, when the external circuit is welded to the first portion 2111, it is possible to reduce the risk that the upper insulation portion 400 will absorb heat released during welding and become damaged, thereby helping to ensure the insulation performance and sealing performance of the upper insulation portion 400.

Furthermore, in addition to serving, as previously described, as a mold-positioning datum surface for supporting the mold, the second portion 2112 may also be used to determine whether, when the cavity top surface is brought into abutting engagement with the second portion 2112, the two may conformingly mate to form a sealing structure exhibiting satisfactory sealing integrity. Upon formation of the upper insulation portion 400 by injection molding, if the third end surface 410 extends beyond the second portion 2112, this indicates that the cavity top surface and the second portion 2112 have not achieved a sufficient conformal fit in abutment; a resultant sealing structure exhibits inferior sealing performance, the material may not have adequately filled the cavity, and the upper insulation portion 400 may exhibit shrinkage voids, non-uniform molding, poor surface quality, and similar defects, leading to deficient insulation and sealing performance. Conversely, if the third end surface 410 does not extend beyond the second portion 2112, this indicates that the cavity top surface and the second portion 2112 are in relatively tight conformal abutment, the resulting sealing structure exhibits favorable sealing performance, and the upper insulation portion 400 is of superior molding quality with improved insulation and sealing performance.

As shown in FIG. 4 and FIG. 5, in some embodiments, the lid 100 includes a fixing structure 120 connected to the lid base 110. The fixing structure 120 is arranged around the mounting hole 111. The fixing structure 120 includes a first fixing portion 121 fixedly connected to the terminal 200. The first fixing portion 121 is located on a side of the lid base 110 away from the electrode assembly 3000 along the first direction. The upper insulation portion 400 is at least partially connected between the first fixing portion 121 and the terminal 200. The first fixing portion 121 includes a fourth end surface 1213 away from the electrode assembly 3000 along the first direction. On a side away from the electrode assembly 3000 along the first direction, the third end surface 410 exceeds the fourth end surface 1213, a linear distance between the third end surface 410 and the fourth end surface 1213 is H₂, where H₂ ≥ 0.2 mm.

It needs to be specified that, as can be seen from FIG. 4, the first fixing portion 121 includes two portions, wherein one portion is directly connected to the lid base 110 (hereinafter referred to as first extension portion 1211), and the other portion is connected to the lid base 110 through the first extension portion 1211 (hereinafter referred to as second extension portion 1212).

Taking the direction shown in FIG. 4 as an example for illustration, the first extension portion 1211 may extend vertically upward along the first direction, or may extend obliquely upward converging toward a central axis of the mounting hole 111. Similarly, the second extension portion 1212 may extend horizontally toward a central axis direction of the mounting hole 111, or may extend obliquely upward toward the central axis of the mounting hole 111.

Exemplarily, the first fixing portion 121 and the lid base 110 may be connected by welding or integral molding.

Exemplarily, H₂ may be 0.2 mm, 0.3 mm, 0.4 mm, 0.5 mm, 0.6 mm, 0.7 mm, 0.8 mm, 0.9 mm, 1 mm, 1.5 mm or 2 mm.

It needs to be specified that, as can be seen from FIG. 4, the upper insulation portion 400 is not only located within the mounting hole 111, but also extends beyond the fourth end surface 1213 and continuously extends to a side of the first fixing portion 121 away from the terminal base 210, and may even extend to a surface of the lid base 110 away from the electrode assembly 3000. In other words, along the first direction, the upper insulation portion 400 includes a portion located on a side of the fourth end surface 1213 away from the electrode assembly 3000, and a surface of this portion away from the electrode assembly 3000 along the first direction forms the third end surface 410.

When the upper insulation portion 400 is molded by injection molding, the flowing injection-molding material generally flows from a side of the first fixing portion 121 away from the terminal base 210 along the preset direction toward the inside of the mounting hole 111. If H₂ is excessively small, this indicates that the spacing, along the first direction, between the cavity top surface and the fourth end surface 1213 is unduly small, such that the injection-molding material is not readily able to pass through the gap between the cavity top surface and the fourth end surface 1213. As a result, an insufficient amount of the injection-molding material may enter the mounting hole 111, thereby causing the molded quality of the resulting upper insulation portion 400 to be substandard, failing to establish a reliable connection between the terminal base 210 and the lid 100, and failing to ensure the insulation performance and sealing performance between the terminal 200 and the lid 100.

To avoid the above problems, this embodiment designs H₂ as H₂ ≥ 0.2 mm to ensure that when the upper insulation portion 400 is formed through mold injection molding, there is sufficient gap between the cavity top surface and the fourth end surface 1213, so that the flowing injection-molding material may smoothly enter the mounting hole 111, which helps to ensure the molding quality of the upper insulation portion 400.

As shown in FIG. 4, in some embodiments, the fixing structure 120 further includes a second fixing portion 122. The second fixing portion 122 is located on a side of the first fixing portion 121 close to the electrode assembly 3000 along the first direction. The terminal 200 includes a protruding portion 220 protruding from the terminal base 210 along a radial direction of the terminal 200. Along the first direction, the protruding portion 220 is disposed between the second portion 2112 and the second end surface 212. The lid assembly 1000 includes a sealing portion 300 located between the protruding portion 220 and the second fixing portion 122 and disposed around the terminal base 210. Along the first direction, an orthogonal projection of the sealing portion 300 covers the second portion 2112.

Exemplarily, a portion of the second fixing portion 122 directly connected to the lid base 110 may extend toward a direction close to the electrode assembly 3000, while other parts extend toward a direction close to the central axis of the mounting hole 111. Alternatively, the second fixing portion 122 as a whole only extends toward the central axis of the mounting hole 111, taking the direction shown in FIG. 5 as an example, the second fixing portion 122 as a whole extends horizontally toward the central axis of the mounting hole 111. In this condition, the second fixing portion 122 may be aligned with a surface of the lid base 110 on a side close to the electrode assembly 3000.

Exemplarily, the second fixing portion 122 and the lid base 110 may be connected by welding or integral molding.

Exemplarily, along the first direction, an orthogonal projection of the protruding portion 220 on the second fixing portion 122 at least partially overlaps with the second fixing portion 122.

Exemplarily, the sealing portion 300 may include an annular and elastic sealing ring, which may deform when compressed and fill the parts that need to be sealed to produce a sealing effect.

It needs to be specified that the protruding portion 220 protrudes from the first side wall 213 of the terminal base 210 along a direction away from the axis of the terminal base 210. Since the sealing portion 300 is disposed around the terminal base 210, the protruding portion 220 may contact the surface of the sealing portion 300 close to the protruding portion 220 and apply a force along the first direction to the sealing portion 300.

Prior to forming the upper insulation portion 400, the terminal 200 may first be installed into the mounting hole 111, and a sealing portion 300 may be disposed between the protruding portion 220 and the second fixing portion 122. Thereafter, during injection molding to form the upper insulation portion 400, the second portion 2112 may be pressed by the cavity top surface, thereby causing the protruding portion 220 to downwardly press the sealing portion 300, while a position of the second fixing portion 122 along the first direction remains unchanged. In this manner, cooperation between the protruding portion 220 and the second fixing portion 122 both compresses the sealing portion 300 to deform the sealing portion 300 so as to achieve a sealing effect and also ensures that the cavity top surface and the second portion 2112 are in abutting engagement. While the flowing injection-molding material is injected into the mold cavity, the cavity top surface continues to press the second portion 2112 so as to maintain the sealing portion 300 in a deformed state. Upon solidification of the injection-molding material within the cavity, the upper insulation portion 400 is formed. By virtue of the upper insulation portion 400 connecting the terminal 200 and the lid 100, a relative positional relationship between the terminal 200 and the lid 100 along the first direction may be maintained. Correspondingly, an amount of deformation of the sealing portion 300 is not reduced, thereby ensuring that the sealing portion 300 provides favorable sealing performance.

Referring to FIG. 4, a portion of the sealing portion 300 located between the second fixing portion 122 and the protruding portion 220 may extend from an end of the second fixing portion 122 away from the lid base 110 along the preset direction to an outer edge of the protruding portion 220. Combining with the aforementioned content, it may be known that the cavity top surface presses the second portion 2112 to cause the sealing portion 300 to be compressed and deformed. In other words, when the terminal 200 is compressed, the second portion 2112 serves as a force-bearing surface of the terminal 200 as a whole.

In this embodiment, a projection of the sealing portion 300 onto the first end surface 211, taken along the first direction, covers the second portion 2112. In conjunction with the foregoing description and FIG. 4, along the preset direction, the dimension of the first portion 2111 is greater than the dimension of the second end surface 212, i.e., the dimension of the first portion 2111 is greater than the dimension of the portion of the terminal base 210 located below the protruding portion 220. Because the second portion 2112 is disposed around the first portion 2111, the second portion 2112, along the preset direction, is positioned between the first sidewall 213 below the protruding portion 220 and an outer contour of the sealing portion 300. When the second portion 2112 is subjected to a load, the resulting compressive force may be transmitted more uniformly and effectively to the sealing portion 300, such that deformation of the sealing portion 300 under load is more uniform, thereby providing improved sealing performance.

As shown in FIG. 5 and FIG. 6, in some embodiments, along the first direction, the upper insulation portion 400 covers a portion of the chamfer.

Referring to FIG. 5 and FIG. 6, when the upper insulation portion 400 covers a portion of the chamfer, a longitudinal connecting surface between the upper insulation portion 400 and the first sidewall 213 is covered by a portion of the upper insulation portion 400 that overlies the chamfer, thereby providing protection to the aforementioned longitudinal connecting surface. During assembly, transport, and use of the lid assembly 1000, ingress of foreign matter such as dust, adhesives (e.g., glue), or metal powder into the foregoing longitudinal connecting surface may be prevented, thereby ensuring improved connection reliability and sealing performance between the upper insulation portion 400 and the terminal base 210.

Exemplarily, an end portion of the upper insulation portion 400 covering a portion of the chamfer close to the second side wall 2113 may form a stepped structure, a rounded corner structure, etc., which is not limited here.

Based on the same inventive concept, combining with the description of the lid assembly 1000 of the above various embodiments, this embodiment provides a manufacturing method, which has the corresponding technical effects of the lid assembly 1000 of the above various embodiments, and will not be described in detail here.

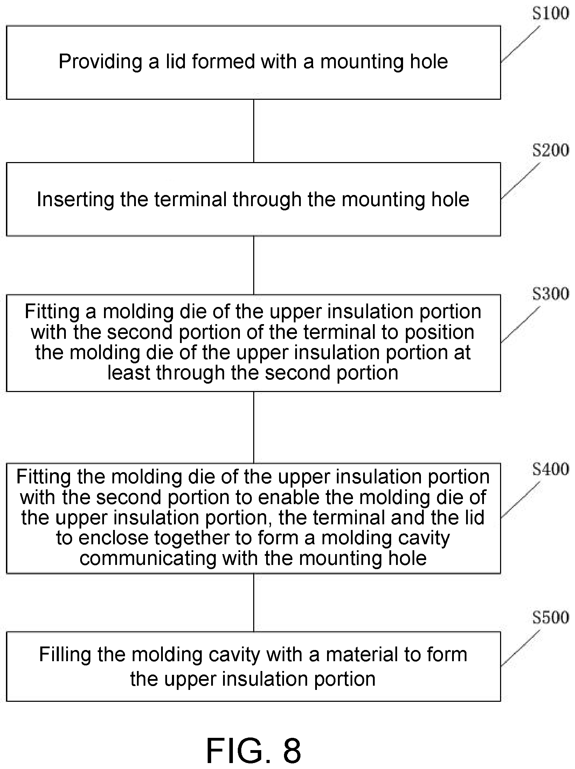

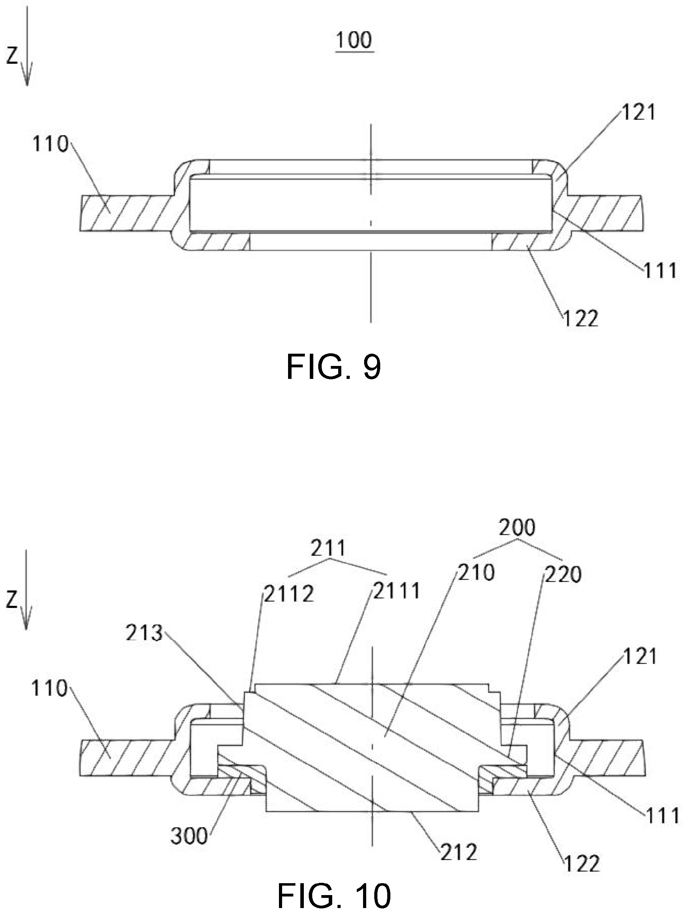

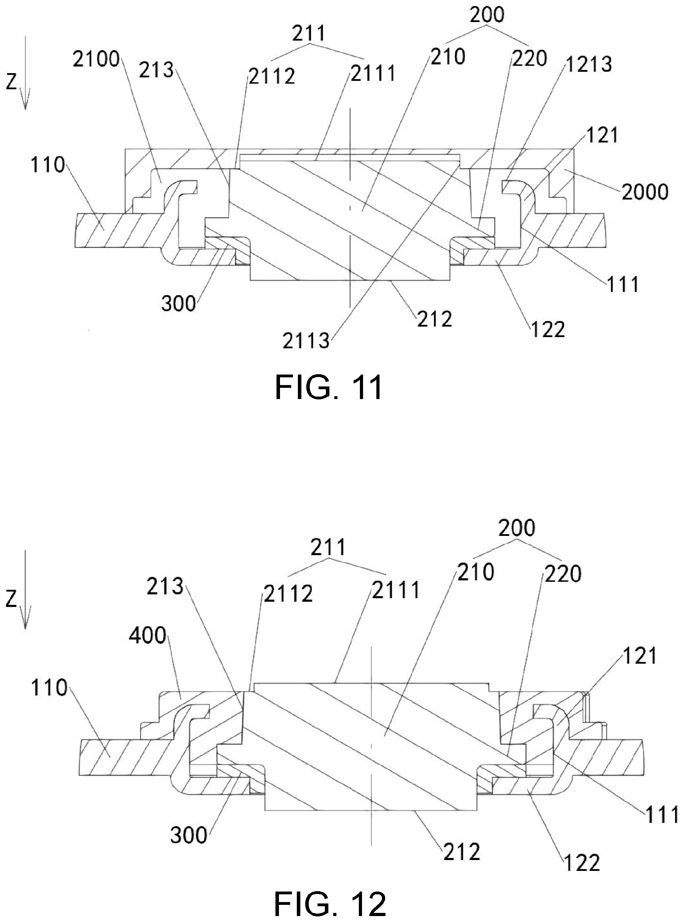

FIG. 8 is a flow diagram of a manufacturing method. FIG. 9 is a partial sectional diagram of the lid assembly 100 with a second structure before assembling the terminal 200. FIG. 10 is a partial sectional diagram of the terminal 200 connected with the sealing portion 300 being inserted into the mounting hole 111 of the lid assembly 1000 with a second structure. FIG. 11 illustrates a partial sectional diagram in which the molding die 2000 of the upper insulation portion presses the terminal 200, and FIG. 12 illustrates a partial sectional diagram after formation of the upper insulation portion 400.

As shown in FIG. 8, the manufacturing method provided in this embodiment is provided to form the lid assembly 1000 as in the above various embodiments, and the manufacturing method includes:

Step S100, as shown in FIG. 9, providing the lid 100 formed with the mounting hole 111.

It needs to be specified that in step S100, the first fixing portion 121 and the second fixing portion 122 have already been formed as the preset structure as shown in FIG. 9, and during the subsequent assembly process of the lid assembly 1000, mechanical shaping processing will not be performed on the first fixing portion 121 and the second fixing portion 122 again.

Step S200, as shown in FIG. 10, inserting the terminal 200 through the mounting hole 111.

In some embodiments, the lid assembly 1000 includes the sealing portion 300. Before performing step S200, it is necessary to first connect the sealing portion 300 to a surface of the protruding portion 220 away from the first portion 2111 along the first direction, or connect the sealing portion 300 to a surface of the second fixing portion 122 close to the first fixing portion 121 along the first direction.

In step S200, the terminal 200 connected with the sealing portion 300 may be directly passed through an opening surrounded by the first fixing portion 121 and installed into the mounting hole 111. Moreover, since a diameter of the opening surrounded by the second fixing portion 122 is smaller than an outer diameter of the protruding portion 220, the second fixing portion 122 will provide a limiting effect on the protruding portion 220, keeping the protruding portion 220 between the second fixing portion 122 and the first fixing portion 121. A lower portion of the second end surface 212 of the terminal base 210 may pass through an opening surrounded by the second fixing portion 122, facilitating positioning of the terminal 200 itself or between the terminal 200 and the lid 100.

Step S300, as shown in FIG. 11, fitting the molding die 2000 of the upper insulation portion with the second portion 2112 of the terminal 200, so as to position the molding die 2000 of the upper insulation portion at least through the second portion 2112.

By way of example, with reference to the structure and orientation illustrated in FIG. 11, the molding die 2000 of the upper insulation portion is gradually lowered from above the first end surface 211 toward the first end surface 211 until it comes into close-fitting abutting engagement with the second portion 2112. In this condition, the second portion 2112 supports the molding die 2000 of the upper insulation portion along the first direction, thereby positioning the molding die 2000 of the upper insulation portion in the first direction. Meanwhile, because the first portion 2111 is higher than the second portion 2112, a stepped surface defined by the first portion 2111 and the second portion 2112 may further serve to limit the molding die 2000 of the upper insulation portion in the preset direction, thereby positioning the molding die 2000 of the upper insulation portion in the preset direction. Accordingly, the position of the molding die 2000 of the upper insulation portion is fixed, providing a sound basis for forming the upper insulation portion 400 and contributing to improved molding quality of the upper insulation portion 400.

Meanwhile, during the process of positioning the molding die 2000 of the upper insulation portion, the molding die 2000 of the upper insulation portion never contacts the first portion 2111, which may effectively avoid the first portion 2111 being scratched by the molding die 2000 of the upper insulation portion.

Step S400, as shown in FIG. 11, through the cooperation of the molding die 2000 of the upper insulation portion with the second portion 2112, it is possible for the molding die 2000 of the upper insulation portion, the terminal 200 and the lid 100 together to define a molding cavity 2100 communicating with the mounting hole 111.

By way of example, and with reference to the structure and orientation shown in FIG. 11, an inner wall of the molding die 2000 of the upper insulation portion, an upper surface of the lid base 110, an outer surface (including an circumferential outer wall of the first fixing portion 121 and the fourth end surface 1213) of the first fixing portion 121, and a portion of the first sidewall 213 adjacent to the second portion 2112 together define, at least in part, the molding cavity 2100. The molding die 2000 of the upper insulation portion is formed with an injection inlet in fluid communication with the molding cavity 2100, through which the flowing injection-molding material may be introduced into the molding cavity 2100.

The molding die 2000 of the upper insulation portion cooperates with the second portion 2112 through its inner wall (for example, the cavity top surface). In this condition, the molding die 2000 of the upper insulation portion applies a downward force on the terminal 200 and keeps the lid 100 in the current position. During the process of the terminal 200 moving downward under pressure, the protruding portion 220 will press the sealing portion 300 downward, while the second fixing portion 122 will support the sealing portion 300 upward. Under the combined action of the protruding portion 220 and the second fixing portion 122, the sealing portion 300 will deform under pressure, thereby forming a seal at least between the protruding portion 220 and the second fixing portion 122.

In this condition, a sealing structure is formed between the inner wall of the molding die 2000 of the upper insulation portion and the second portion 2112, which may prevent the flowing injection-molding material from entering between them and causing leakage. Similarly, after the molding die 2000 of the upper insulation portion abuts against the upper surface of the lid base 110, a sealing structure is formed between the molding die 2000 of the upper insulation portion and the upper surface of the lid base 110, which may also prevent the flowing injection-molding material from entering between them and causing leakage. In this condition, the molding die 2000 of the upper insulation portion, the lid 100, the terminal 200 and the sealing portion 300 may respectively seal the space in the molding cavity 2100 and the mounting hole 111 with the two communicating with each other, for accommodating the flowing injection-molding material to further form the upper insulation portion 400.

Step S500, as shown in FIG. 12, filling the molding cavity 2100 with a material to form the upper insulation portion 400.

Exemplarily, the material filled into the molding cavity 2100 may be a liquid material, a solid material with small particles, or a solid-liquid mixture.

It may be understood that since the molding cavity 2100 and the mounting hole 111 are in communication, when filling the molding cavity 2100 with material, the material not only exists in the molding cavity 2100, but can also enter the mounting hole 111. The molding cavity 2100 and the mounting hole 111 define the material inside them respectively to form the upper insulation portion 400 conforming to the design structure.

As shown in FIG. 12, in some embodiments, step S500 includes:
Injecting the flowing injection-molding material into the molding cavity 2100, so that the injection-molding material fills into the mounting hole 111 and spreads along the preset direction to a side of the first fixing portion 121 away from the terminal 200, and the injection-molding material forms the upper insulation portion 400 connecting the terminal 200 and the lid 100 after solidification.

After forming the molding cavity 2100, the sealing portion 300 is kept in a compressed and deformed state, and the flowing injection-molding material is injected into the molding cavity 2100. After the flowing injection-molding material enters the molding cavity 2100, the fills the molding cavity 2100 and flows toward a space in the mounting hole 111 until the space in the mounting hole 111 is filled. The injection-molding material in the mounting hole 111 may form a portion of the upper insulation portion 400 connecting the terminal 200 and the lid 100 after solidification, and the injection-molding material located in the molding cavity 2100 may form a portion of the upper insulation portion 400 covering the outer surface of the first fixing portion 121 after solidification.

After the injection-molding material is solidified, the molding die 2000 of the upper insulation portion may be removed. In this condition, the terminal 200 and the lid 100 have formed a reliable connection through the upper insulation portion 400, a relative position between them remains unchanged, and the sealing portion 300 also maintains the compressed and deformed state with reliable sealing effect.

## Claims

1. A lid assembly (1000), comprising:
a lid (100), the lid (100) comprising a lid base (110), wherein the lid base (110) is provided with a mounting hole (111) extending through the lid base (110) along a thickness direction (Z); and
a terminal (200), connected to the lid (100) and disposed through the mounting hole (111), wherein the terminal (200) comprises a terminal base (210), the terminal base (210) comprises a first end surface (211) away from an electrode assembly (3000) along the thickness direction (Z) of the lid base (110);
wherein
the first end surface (211) comprises a first portion (2111) and a second portion (2112) disposed around the first portion (2111), along the thickness direction (Z) of the lid base (110), the first portion (2111) protrudes from the second portion (2112) toward a side away from the electrode assembly (3000).

2. The lid assembly (1000) according to claim 1, wherein
the terminal base (210) comprises a first side wall (213), and further comprises a second end surface (212) facing the electrode assembly (3000) along the thickness direction (Z) of the lid base (110), the first side wall (213) connects the second portion (2112) and the second end surface (212);
wherein a rounded corner or a chamfer is formed between the second portion (2112) and the first side wall (213).

3. The lid assembly (1000) according to claim 2, wherein
along a preset direction (X), a dimension of the rounded corner or the chamfer is L₁,
where 0 mm < L₁ ≤ 2 mm,
wherein the preset direction (X) is perpendicular to the thickness direction (Z) of the lid base (110).

4. The lid assembly (1000) according to claim 1, wherein
the terminal base (210) further comprises a second side wall (2113), the first portion (2111) and the second portion (2112) are connected through the second side wall (2113), and a transition structure (2114) is formed between the second portion (2112) and the second side wall (2113);
wherein along the thickness direction (Z) of the lid base (110), the transition structure (2114) is recessed toward a side close to the electrode assembly (3000).

5. The lid assembly (1000) according to claim 1, wherein
the terminal base (210) comprises a second end surface (212) facing the electrode assembly (3000) along the thickness direction (Z) of the lid base (110);
wherein along a preset direction, a dimension (D₂) of the first portion (2111) is greater than a dimension (D₁) of the second end surface (212), and the preset direction is perpendicular to the thickness direction (Z) of the lid base (110).

6. The lid assembly (1000) according to claim 1, wherein
along a preset direction (X), a width of the second portion (2112) is L₂,
where 0.1 mm ≤ L₂ ≤ 6 mm,
wherein the preset direction (X) is perpendicular to the thickness direction (Z) of the lid base (110).

7. The lid assembly (1000) according to claim 1, wherein
along the thickness direction (Z) of the lid base (110), a linear distance between the first portion (2111) and the second portion (2112) is H₁,
where 0.1 mm ≤ H₁ ≤ 2 mm.

8. The lid assembly (1000) according to claim 2, wherein
the lid assembly (1000) comprises an upper insulation portion (400) fixedly connected to the terminal (200), and the upper insulation portion (400) comprises a third end surface (410) away from the electrode assembly (3000) along the thickness direction (Z) of the lid base (110);
wherein the third end surface (410) does not exceed the second portion (2112) on a side away from the electrode assembly (3000) along the thickness direction (Z) of the lid base (110).

9. The lid assembly (1000) according to claim 8, wherein
the lid (100) comprises a fixing structure (120) connected to the lid base (110), the fixing structure (120) is arranged around the mounting hole (111), the fixing structure (120) comprises a first fixing portion (121) fixedly connected to the terminal (200), the first fixing portion (120) is located on a side of the lid base (110) away from the electrode assembly (3000) along the thickness direction (Z) of the lid base (110);
the upper insulation portion (400) is at least partially connected between the first fixing portion (121) and the terminal (200);
the first fixing portion (121) comprises a fourth end surface (1213) away from the electrode assembly (3000) along the thickness direction (Z) of the lid base (110);
on a side away from the electrode assembly (3000) along the thickness direction (Z) of the lid base (110), the third end surface (410) exceeds the fourth end surface (1213), a linear distance between the third end surface (410) and the fourth end surface (1213) is H₂,
where H₂ ≥ 0.2 mm.

10. The lid assembly (1000) according to claim 9, wherein
the fixing structure (120) further comprises a second fixing portion (122), the second fixing portion (122) is located on a side of the first fixing portion (121) close to the electrode assembly (3000) along the thickness direction (Z) of the lid base (110);
the terminal (200) comprises a protruding portion (220) protruding from the terminal base (210) along a radial direction of the terminal (200), along the thickness direction (Z) of the lid base (110), the protruding portion (220) is arranged between the second portion (2112) and the second end surface (212);
the lid assembly (1000) comprises a sealing portion (300) located between the protruding portion (220) and the second fixing portion (122) and arranged around the terminal base (210);
along the thickness direction (Z) of the lid base (110), an orthogonal projection of the sealing portion (300) covers the second portion (2112).

11. The lid assembly (1000) according to claim 8, wherein
along the thickness direction (Z) of the lid base (110), the upper insulation portion (400) covers a portion of the rounded corner or the chamfer.

12. A manufacturing method, for forming the lid assembly (1000) according to any one of claims 1 to 11, the manufacturing method comprising:
providing the lid (100) formed with the mounting hole (111);
inserting the terminal (200) through the mounting hole (111);
fitting a molding die (2000) of the upper insulation portion (400) with the second portion (2112) of the terminal (200) to position the molding die (2000) of the upper insulation portion (400) at least through the second portion (2112);
fitting the molding die (2000) of the upper insulation portion (400) with the second portion (2112) to enable the molding die (2000) of the upper insulation portion (400), the terminal (200) and the lid (100) together to define a molding cavity (2100) communicating with the mounting hole (111); and
filling the molding cavity (2100) with a material to form the upper insulation portion (400).

13. The manufacturing method according to claim 12, wherein
the lid (100) comprises a fixing structure (120) connected to the lid base (110), the fixing structure (120) is arranged around the mounting hole (111), the fixing structure (120) comprises a first fixing portion (121) fixedly connected to the terminal (200), the first fixing portion (120) is located on a side of the lid base (110) away from the electrode assembly (3000) along the thickness direction (Z) of the lid base (110);
the step of filling the molding cavity (2100) with the material to form the upper insulation portion (400) comprises:
injecting a flowing injection-molding material into the molding cavity (2100) to enable the injection-molding material to fill into the mounting hole (111) and spread along a preset direction to a side of the first fixing portion (121) away from the terminal (200), the injection-molding material forms the upper insulation portion (400) connecting the terminal (200) and the lid (100) after solidification, wherein the preset direction is perpendicular to the thickness direction (Z) of the lid base (110).
